# EUROPÄISCHE PATENTANMELDUNG

(11) **EP 2 801 436 A2**
(43) Veröffentlichungstag der Anmeldung: **12.11.2014**
(21) Anmeldenummer: 14166894.7
(22) Anmeldetag: 02.05.2014
(51) Int. Cl.: B23P 11/02, F01L 1/047, F16B 4/00, F16D 1/08, F16H 53/02

(54) **Nockenwelle**

(30) Priorität: 10.05.2013 DE 102013208609
(71) Anmelder: Mahle International GmbH, 70376 Stuttgart (DE)
(72) Erfinder: Krepulat, Walter, 70563 Stuttgart (DE)
(74) Vertreter: BRP Renaud & Partner mbB Rechtsanwälte Patentanwälte Steuerberater

(57) **Zusammenfassung**

Die Erfindung betrifft eine Nockenwelle (1) mit einem Nockenwellenrohr (7) und zumindest einem darauf thermisch gefügten Funktionsbauteil (2), insbesondere einem Nocken (3). Erfindungswesentlich ist dabei, dass eine Durchgangsöffnung (4) des Funktionsbauteils (2) und/oder eine Außenkontur (5) des Nockenwellenrohrs (7) bzw. einer darauf angeordneten Hülse (6) im Bereich der Fügestelle derart geformt sind, dass eine asymmetrische Verformung des Nockenwellenrohrs (7) nach dem thermischen Fügen des Funktionsbauteils (2) auf dem Nockenwellenrohr (7) zumindest minimiert ist.

## Beschreibung

Die vorliegende Erfindung betrifft eine Nockenwelle mit einem Nockenwellenrohr und zumindest einem darauf thermisch gefügten Funktionsbauteil gemäß dem Oberbegriff des Anspruchs 1. Die Erfindung betrifft außerdem ein Funktionsbauteil für eine derartige Nockenwelle.

Beim Fügen von unrunden, asymmetrischen Funktionsbauteilen, insbesondere beim thermischen Fügen von Nocken (Pumpennocken oder Ventilbetätigungsnocken) auf Nockenwellen, kann es durch den Querpresssitz und die damit einhergehende Überdeckung zwischen Nockenbohrung und Nockenwellenrohrdurchmesser zu einer Verformung des Nockenwellenrohres, das heißt der Nockenwelle im Bereich der Funktionsbauteile kommen. Hierdurch können auch angrenzende Lagerflächen derart verformt werden, dass diese sich außerhalb einer tolerierbaren Spezifikation befinden und dadurch aufwändig nachgearbeitet, beispielsweise geschliffen, werden müssen. Das Nachschleifen stellt jedoch einen zusätzlichen Fertigungsschritt dar, da die Nockenwelle ja bereits vorab geschliffen wurde. Dieser zusätzliche Fertigungsschritt ist dabei nicht nur aufwändig und zeitintensiv, sondern selbstverständlich auch teuer. Die ungleichmäßige Verformung der Nockenwelle wird unter anderem dadurch begünstigt, dass der Nocken bzw. generell das unrunde Funktionsbauteil durch seine Form unterschiedlich steif ist und somit die Pressung auf die Nockenwelle im Bereich eines Nockenberges größer ist als im gegenüberliegenden Grundkreis.

Die vorliegende Erfindung beschäftigt sich daher mit dem Problem, für eine Nockenwelle der gattungsgemäßen Art eine verbesserte Ausführungsform anzugeben, welche sich insbesondere durch ein kostengünstigeres Herstellungsverfahren auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Nockenwelle mit einem Nockenwellenrohr und zumindest einem darauf thermisch gefügten Funktionsbauteil im Bereich einer Fügestelle derart zu formen, dass eine variable Überdeckung erzielt werden und dadurch eine asymmetrische Verformung des Nockenwellenrohrs nach dem thermischen Fügen des Funktionsbauteils zumindest minimiert ist. Dies bedeutet, dass die Überdeckung in der Fügestelle ortsabhängig veränderlich ist und somit in Abhängigkeit des zu fügenden Funktionsbauteils eine, im Vergleich zu einer örtlich konstanten Überdeckung, vorteilhafte Verformung des Nockenwellenrohrs bewirkt. Es ist bei einer besonders vorteilhaften Ausführungsform vorstellbar, dass die komplette Fügestelle eine 3D-Freiformfläche bildet, die durch eine Finite Elemente Simulation derart ausgelegt wurde, so dass die Verformung des Nockenwellenrohrs bestmöglich minimiert ist.

Zusätzlich oder alternativ kann auch eine Durchgangsöffnung des Funktionsbauteils in ähnlicher Weise gestaltet werden, wodurch ebenfalls die asymmetrische Verformung des Nockenwellenrohrs und damit der Nockenwelle, welche ein Nachschleifen an zur Fügestelle benachbarten Lagerstellen erfordert, zumindest minimiert, vorzugsweise sogar eliminiert werden kann. Durch die entsprechende Ausbildung der Durchgangsöffnung des Funktionsbauteils und/oder einer Außenkontur des Nockenwellenrohrs bzw. einer darauf angeordneten Hülse im Bereich der Fügestelle lässt sich somit die Verformung des Nockenwellenrohrs nach dem thermischen Fügen deutlich reduzieren, so dass die Lagerstellen vorzugsweise innerhalb einer tolerierbaren Spezifikation bleiben und nicht nachgearbeitet, insbesondere nicht teuer und aufwändig nachgeschliffen, werden müssen.

Bei einer vorteilhaften Weiterbildung der erfindungsgemäßen Lösung ist auf dem Nockenwellenrohr im Bereich der Fügestelle eine Hülse angeordnet, die die mit dem Funktionsbauteil zusammenwirkende Außenkontur bildet. Die im vorherigen Absatz und in der folgenden Beschreibung beschriebene Bearbeitung der Außenkontur der Nockenwelle kann dabei die direkte Außenkontur des Nockenwellenrohrs betreffen oder aber eine Außenkontur der auf dem Nockenwellenrohr gefügten, beispielsweise aufgepressten, Hülse. Die Außenkontur der Hülse wirkt dann mit der Durchgangsöffnung des Funktionsbauteils zusammen. Die Hülse kann beispielsweise aus einem Leichtmetall, insbesondere aus Aluminium, ausgebildet sein, wodurch sich eine erhöhte Reibung zwischen der Hülse und dem Nockenwellenrohr, welches üblicherweise aus Stahl ausgebildet ist, erreicht werden kann. Die Hülse selbst kann auf ein nicht bearbeitetes Nockenwellenrohr gefügt bzw. aufgepresst werden, so dass dann nur noch der Lagersitz geschliffen werden muss. Insbesondere kann dadurch besonders einfach und kostengünstig die Außenfläche der Hülse derart bearbeitet werden, dass eine vorteilhafte ortsabhängige variable Überdeckung mit dem zu fügenden Funktionsbauteil erzielt werden kann. Dies kann auf einem separat zu fertigenden Bauteil besser umgesetzt werden, als beispielsweise auf dem Nockenwellenrohr direkt.

Bei einer vorteilhaften Weiterbildung der erfindungsgemäßen Lösung ist die Außenkontur der Nockenwelle (mit oder ohne Hülse) im Bereich der Fügestelle elliptisch und/oder ballig ausgebildet. Eine elliptische bzw. ballige Ausbildung der Außenkontur bewirkt eine ortsabhängig veränderliche Pressung bzw. Überdeckung des Funktionsbauteils auf der Nockenwelle bzw. auf der Hülse, wodurch eine unvorteilhafte, da ungleichmäßige Krafteinwirkung durch das Funktionsbauteil auf die Nockenwelle beim Abkühlen des Funktionsbauteils vermieden werden und somit eine unvorteilhafte Verformung des Nockenwellenrohrs minimiert werden kann

Zweckmäßig ist die Durchgangsöffnung des Funktionsbauteils unrund gebohrt, gedreht oder geschliffen. Eine unrunde Bohrung kann beispielsweise durch ein Vorspannen des Funktionsbauteils, beispielsweise des Nockens, während dem Bohren erzielt werden, wobei bei einem nachträglichen Entspannen bzw. Entlasten des Funktionsbauteils sich die unrunde Durchgangsöffnung ergibt. Diese unrunde Durchgangsöffnung bewirkt nach dem thermischen Fügen mit der Nockenwelle, dass sich diese nicht oder zumindest nur minimal verformt, so dass die Nockenwelle nach dem thermischen Fügen ihre kreisrunde Form behält, was insbesondere für benachbart zu den Funktionsbauteilen angeordneten Lagerstellen von überragender Bedeutung ist. Durch das Verhindern der Verformung des Nockenwellenrohrs und damit der Nockenwelle nach dem Abkühlen der damit gefügten Funktionsbauteile ist insbesondere ein bisher unter Umständen erforderliches aufwändiges und dadurch auch teures Nachbearbeiten der Nockenwelle, beispielsweise ein Schleifen, nicht mehr erforderlich, so dass die Funktionsbauteile, das heißt im konkreten Fall die Nocken, bereits im fertig bearbeiteten Zustand mit dem Nockenwellenrohr gefügt werden können.

Zum Einbringen der unrunden Durchgangsöffnung in das Funktionsbauteil kann dieses beispielsweise mittels einer Backenspannvorrichtung elastisch zusammengedrückt, das heißt elastisch vorgespannt und in diesem vorgespannten Zustand die eigentliche Nockenbohrung eingebracht werden. Die eingebrachte Nockenbohrung weist dabei eine zunächst kreisrunde Form auf, die jedoch oval bzw. elliptisch wird, sofern die Backenspannvorrichtung entspannt wird und sich dadurch das Funktionsbauteil elastisch zurückverformt.

Bei einer weiteren vorteilhaften Ausführungsform der erfindungsgemäßen Nockenwelle wird die Durchgangsöffnung gebohrt, geschliffen, gerieben, gedreht oder gefräst. Bereits diese nicht abschließende Aufzählung lässt erahnen, wie vielfältig die Möglichkeit der Herstellung einer Durchgangsöffnung bzw. der Durchgangsbohrung in dem Funktionsbauteil, beispielsweise dem Nocken ist. Üblicherweise wird die Durchgangsöffnung gebohrt und anschließend mittels eines spanabhebenden Werkzeugs, beispielsweise eines Fräswerkzeugs, oder eines Schleifwerkzeugs nachbearbeitet. Bei geschmiedeten oder gesinterten Funktionsbauteilen ist die Bohrung weitestgehend schon durch den Fertigungsprozess eingebracht worden und muss nur noch feinbearbeitet werden.

Die vorliegende Erfindung beruht weiter auf dem allgemeinen Gedanken, ein unrundes Funktionsbauteil, wie beispielsweise einen Nocken, mit einer unrunden Durchgangsöffnung zu versehen, die eine Verformung der Nockenwelle nach dem thermischen Fügen des Funktionsbauteils zumindest minimiert. Die Herstellung der Durchgangsöffnung erfolgt dabei durch vorzugsweise das Einbringen einer herkömmlichen Bohrung unter gleichzeitigem elastischen Vorspannen des Funktionsbauteils. Durch das anschließende Entspannen verformt sich die zunächst kreisrunde Durchgangsöffnung in der Art eines Ovals, was beim thermischen Fügen mit der Nockenwelle dazu führt, dass nach einem Erkalten des erhitzten Funktionsbauteils bzw. einem sich Ausdehnen des gekühlten Nockenwellenrohrs lediglich gleichförmig auf das Nockenwellenrohr einwirkende Radialkräfte vorhanden sind, die keine oder zumindest keine nennenswerte Verformung der Nockenwelle bewirken, so dass ein aufwändiges Schleifen benachbarter Lagersitze entfallen kann. Ein langer und ein kurzer Durchmesser der oval ausgebildeten Durchgangsöffnung differieren dabei bei entspanntem Funktionsbauteil um ca. 5-25 µm.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: eine Schnittdarstellung durch eine erfindungsgemäße Nockenwelle im Bereich einer Fügestelle mit einem Funktionsbauteil,
- Fig. 2: eine Darstellung wie in Fig. 1, jedoch bei anders ausgestalteter Nockenwelle und Funktionsbauteil,
- Fig. 3: eine Schnittdarstellung durch eine weitere Ausführungsform der erfindungsgemäßen Nockenwelle,
- Fig. 4: eine Prinzipdarstellung einer möglichen Ausführungsform einer Durchgangsöffnung des Funktionsbauteils bzw. einer Außenkontur der Nockenwelle.

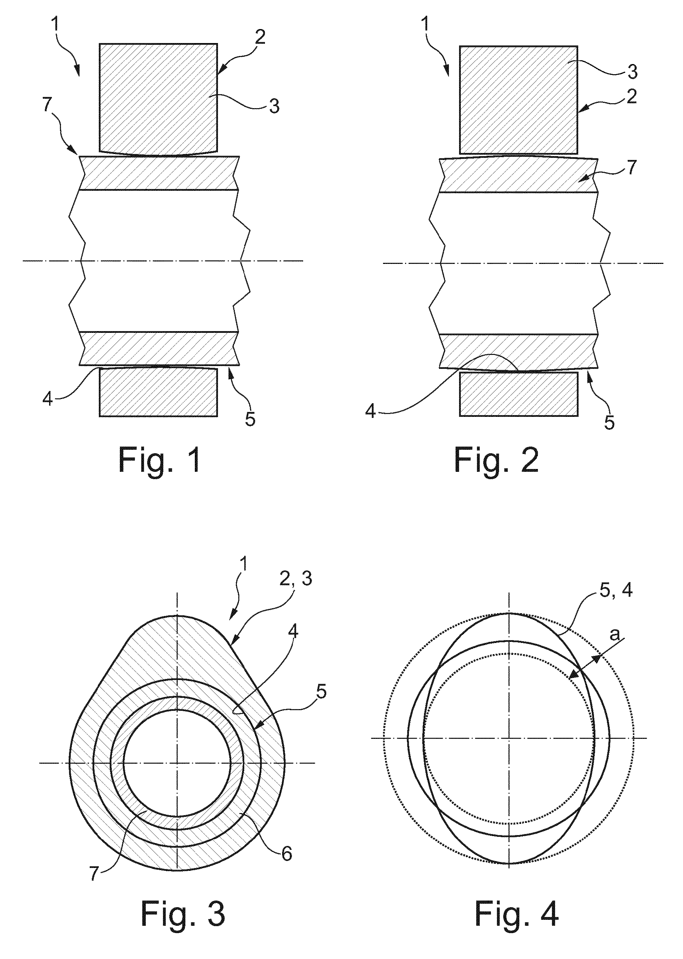

Entsprechend den Figuren 1 und 2 weist eine erfindungsgemäße Nockenwelle 1 ein Nockenwellenrohr 7 und zumindest ein darauf thermisch gefügtes Funktionsbauteil 2, beispielsweise einen Nocken 3, auf. Erfindungsgemäß sind nun eine Durchgangsöffnung 4 des Funktionsbauteils 2 und/oder eine Außenkontur 5 des Nockenwellenrohrs 7 bzw. einer darauf angeordneten Hülse 6 im Bereich der Fügestelle derart geformt, dass eine asymmetrische Verformung des Nockenwellenrohrs 7 und damit der Nockenwelle 1 nach dem thermischen Fügen des Funktionsbauteils 2 auf dem Nockenwellenrohr 7 zumindest minimiert, vorzugsweise sogar eliminiert wird.

Die Außenkontur 5 des Nockenwellenrohrs 7 kann dabei insbesondere im Bereich der Fügestelle elliptisch ausgebildet sein, wie dies beispielsweise gemäß der Figur 4 dargestellt ist. Ebenfalls möglich ist eine ballige Außenkontur 5 des Nockenwellenrohrs 7, wie dies gemäß der Figur 2 dargestellt ist. In gleicher Weise kann selbstverständlich auch die Durchgangsöffnung 4 des Funktionsbauteils 2, insbesondere des Nockens 3, ballig ausgeführt sein, wie dies beispielsweise der Figur 1 zu entnehmen ist, wobei auch eine unrunde Durchgangsöffnung 4, insbesondere eine elliptische Durchgangsöffnung 4, des Funktionsbauteils 2 vorgesehen sein kann. Eine Differenz a zwischen einem langen Durchmesser und einem kurzen Durchmesser kann dabei 5-25 µm betragen (vergleiche Figur 4), wobei die Differenz a im Bereich der Durchgangsöffnung 4 am Funktionsbauteil 2 und/oder im Bereich der Außenkontur 5 des Nockenwellenrohrs 7 vorgesehen werden kann.

Die Außenkontur 5 kann dabei direkt auf dem Nockenwellenrohr 7 ausgebildet sein oder aber im Bereich der Hülse 6 (vergleiche Figur 3), die im Bereich der Fügestelle auf das Nockenwellenrohr 7 aufgepresst ist. Eine derartige Hülse 6 kann beispielsweise aus Leichtmetall, insbesondere aus Aluminium, ausgebildet sein, wodurch eine erhöhte Reibung zwischen dem üblicherweise aus Stahl ausgebildeten Nockenwellenrohrs 7 und der Hülse 6 erzielt werden kann. Generell kann das Funktionsbauteil 2 als Nocken 3 oder aber auch als Geberrad ausgebildet sein. Die Außenkontur 5 des Nockenwellenrohrs 7 bzw. der Hülse 6 kann dabei mittels Drehen bzw. Schleifen hergestellt werden.

Die unrunde Durchgangsöffnung 4 des Funktionsbauteils 2 kann beispielsweise durch ein elastisches Vorspannen des Funktionsbauteils 2 und ein anschließendes Einbringen einer Bohrung hergestellt werden. Die zunächst kreisrunde Bohrung verformt sich oval bzw. elliptisch nach dem Entspannen des Funktionsbauteils 2, wobei die unrunde Durchgangsöffnung 4 bewirkt, dass beim späteren thermischen Fügen des Funktionsbauteils 2 auf dem Nockenwellenrohr 7 vorzugsweise lediglich gleichgroße Radialkräfte auf das Nockenwellenrohr 7 einwirken, so dass dieses sich nicht oder nur marginal verformt, so dass insbesondere benachbart zum Funktionsbauteil 2 angeordnete Lagerstellen nicht nachbearbeitet, insbesondere nicht nachgeschliffen, werden müssen.

Wird, wie gemäß der Figur 3 dargestellt ist, eine Hülse 6 verwendet, so kann diese bezüglich der Außenkontur 5 außen nachträglich bearbeitet werden, was fertigungstechnisch deutlich einfacher ist.

Durch die erfindungsgemäße Ausgestaltung der Durchgangsöffnung 4 des Funktionsbauteils 2 und/oder der Außenkontur 5 des Nockenwellenrohrs 7 bzw. der Hülse 6 im Bereich der jeweiligen Fügestelle kann eine asymmetrische Verformung des Nockenwellenrohrs 7 und damit der Nockenwelle 1 nach dem thermischen Fügen des Funktionsbauteils 2 auf der Nockenwelle 1 zumindest minimiert, vorzugsweise sogar eliminiert werden, wodurch das bisher erforderliche Nachschleifen von benachbart zum Funktionsbauteil 2 angeordneten Lagerstelle bzw. Lagersitzen vermieden werden kann.

## Patentansprüche

1. Nockenwelle (1) mit einem Nockenwellenrohr (7) und zumindest einem darauf thermisch gefügten Funktionsbauteil (2), insbesondere einem Nocken (3), **dadurch gekennzeichnet,**
**dass** eine Durchgangsöffnung (4) des Funktionsbauteils (2) und/oder eine Außenkontur (5) des Nockenwellenrohrs (7) bzw. einer darauf angeordneten Hülse (6) im Bereich der Fügestelle derart geformt sind, dass eine asymmetrische Verformung des Nockenwellenrohrs (7) nach dem thermischen Fügen des Funktionsbauteils (2) auf dem Nockenwellenrohr (7) zumindest minimiert ist.

2. Nockenwelle nach Anspruch 1,
**dadurch gekennzeichnet,**
**dass** auf dem Nockenwellenrohr (7) im Bereich der Fügestelle eine Hülse (6) angeordnet ist, die die mit dem Funktionsbauteil (2) zusammenwirkende Außenkontur (5) bildet.

3. Nockenwelle nach Anspruch 1 oder 2,
**dadurch gekennzeichnet,**
**dass** die Außenkontur (5) im Bereich der Fügestelle elliptisch und/oder ballig ausgebildet ist.

4. Nockenwelle nach einem der vorhergehenden Ansprüche,
**dadurch gekennzeichnet,**
**dass** die Durchgangsöffnung (4) des Funktionsbauteils (2) ballig ausgebildet ist.

5. Nockenwelle nach einem der vorhergehenden Ansprüche,
**dadurch gekennzeichnet,**
**dass** die Durchgangsöffnung (4) des Funktionsbauteils (2) unrund, insbesondere elliptisch, ist.

6. Nockenwelle nach einem der Ansprüche 2 bis 5,
**dadurch gekennzeichnet,**
**dass** die Hülse (6) aus Leichtmetall, insbesondere aus Aluminium, ausgebildet ist.

7. Nockenwelle nach einem der Ansprüche 2 bis 6,
**dadurch gekennzeichnet,**
**dass** die Außenkontur (5) des Nockenwellenrohrs (7) oder der Hülse (6) gedreht oder geschliffen ist.

8. Nockenwelle nach einem der Ansprüche 1 bis 7,
**dadurch gekennzeichnet,**
**dass** die Durchgangsöffnung (4) des Funktionsbauteils (2) unrund gebohrt, gedreht oder geschliffen ist.

9. Nockenwelle nach einem der Ansprüche 1 bis 8,
**dadurch gekennzeichnet,**
**dass** das Funktionsbauteil (2) als Geberrad ausgebildet ist.

10. Nockenwelle nach einem der Ansprüche 1 bis 9,
**dadurch gekennzeichnet,**
**dass** die Durchgangsöffnung (4) bei entspanntem Funktionsbauteil (2) oval ausgebildet ist, wobei eine Differenz (a) zwischen einem langen Durchmesser und einem kurzen Durchmesser 5 ≤ a ≤ 25µm beträgt.

11. Funktionsbauteil (2) für eine Nockenwelle (1) nach einem der Ansprüche 1 bis 10 mit einer unrunden und/oder balligen Durchgangsöffnung (4).
